(19) Europäisches Patentamt
European Patent Office
Office européen des brevets

(11) Veröffentlichungsnummer : **0 014 684**
**B1**

(12) # EUROPÄISCHE PATENTSCHRIFT

(45) Veröffentlichungstag der Patentschrift : **19.05.82**

(21) Anmeldenummer : **80810034.1**

(22) Anmeldetag : **31.01.80**

(51) Int. Cl.³ : **C 07 F 9/38**, C 07 F 9/40, C 07 F 9/42, C 07 F 9/44, A 01 N 57/22, A 01 N 57/30, A 01 N 57/34

(54) **2-Substituierte 5-Phenoxy-phenylphosphonsäurederivate, Verfahren zu ihrer Herstellung und ihre Verwendung als Herbizide.**

(30) Priorität : **06.02.79 CH 1147/79**

(43) Veröffentlichungstag der Anmeldung : **20.08.80 (Patentblatt 80/17)**

(45) Bekanntmachung des Hinweises auf die Patenterteilung : **19.05.82 Patentblatt 82/20**

(84) Benannte Vertragsstaaten : **AT BE CH DE FR GB IT NL**

(56) Entgegenhaltungen :
**DD - A - 106 542**
**FR - A - 2 053 018**

**JOURNAL OF CHEMICAL SOCIETY, Sektion C, The Chemical Society, 1969, Lindon, GB J.I.G. CADOGAN et al. : « The reactivity of organophosphorus compounds. Part XXV. Displacement of activated aromatic nitro-groups by tervalent phosphorus reagents » Seiten 1 314-1 318**

**G.M. KOSOLAPFT et al. : « Organic phosphorus Chemistry », Band 7, 1976, John Wiley & Sons Inc. New York, US, Seiten 226-227**

(73) Patentinhaber : **CIBA-GEIGY AG**
**Patentabteilung Postfach**
**CH-4002 Basel (CH)**

(72) Erfinder : **Maier, Ludwig, Dr.**
**Im Lee 28**
**CH-4144 Arlesheim (CH)**
Erfinder : **Dürr, Dieter, Dr.**
**Brändelistalweg 16**
**CH-4103 Bottmingen (CH)**

**EP 0 014 684 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Imprimerie Jouve, 18, rue St-Denis, 75001 Paris, France

2-Substituierte 5-Phenoxy-phenylphosphonsäurederivate, Verfahren zu ihrer Herstellung und ihre Verwendung als Herbizide

Vorliegende Erfindung betrifft neue, das Pflanzenwachstum beeinflussende, insbesondere herbizid wirksame 2-substituierte 5-Phenoxy-phenylphosphonsäurederivate, Verfahren zu ihrer Herstellung, ferner das Pflanzenwachstum beeinflussende (insbesondere herbizide) Mittel, die diese neuen Phosphonsäurederivate als Wirkstoffe enthalten, sowie die Verwendung der neuen Wirkstoffe und der sie enthaltenden Mittel zur selektiven oder totalen Bekämpfung von Unkräutern und zur Regulierung des Pflanzenwachstums.

In der deutschen Offenlegungsschrift 2 619 841 sind chlorierte und unchlorierte 2-Nitro-phenylphosphonsäuren, deren Natriumsalze und Aethylester als Wirkstoffe für Mittel zur Regulierung des Pflanzenwachstums vorgeschlagen worden. Ein Teil der Wirkstoffe dieser DOS 2 619 841 waren schon aus früheren Literaturstellen, wie « Chemical Communications » *1966*, 491 ; J. Chem. Soc. (C) *1969*, 1314 und Tetrahedron Letters *1967* (21), 1987-89 bekannt, die freie 2-Nitro-phenylphosphonsäure auch als bakterizid wirksam erkannt.

Aus der Reihe der Phenoxy-phenylphosphonsäuren sind 3-substituierte 4-Phenoxy-phenylphosphonsäuren, welche in p-Position des Phenoxyrestes noch weiter substituiert sein können, ohne irgendeine Wirkungsangabe beschrieben worden in : « Organic Phosphorus Compounds », eds. G.M. Kopolapoff and L. Maier, John Wiley & Sons, Inc., New York, *1976*, Vol. 7, Seiten 226-227.

Die Wirkstoffe vorliegender Erfindung, nämlich 2-substituierte 5-Phenoxy-phenylphosphonsäuren und deren Derivate sind jedoch neue Verbindungen, und es wurde gefunden, dass diese neuen Wirkstoffe ausgezeichnete herbizide und pflanzenwachstumsregulierende, aber auch fungizide und zum Teil bakterizide Eigenschaften besitzen. Die letztgenannten Eigenschaften können im Pflanzenschutz wegen der hohen Phytotoxizität der Wirkstoffe aber nicht gut zu praktischer Anwendung gelangen.

Die neuen 2-substituierten 5-Phenoxy-phenylphosphonsäurederivate vorliegender Erfindung entsprechen der Formel I

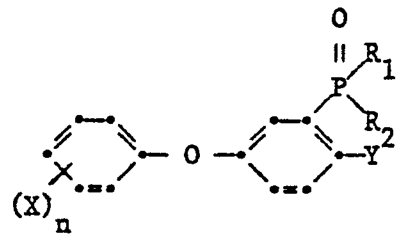

(I)

worin $R_1$ und $R_2$ unabhängig voneinander je Hydroxylgruppen (OH), nieder Alkoxy, nieder Alkylthio, Alkylamino, Dialkylamino, Chlor, Benzyloxy oder Benzylthio, X Halogen oder eine Gruppe $—CF_3$, $—NO_2$, —CN, $—CONH_2$ oder $—CSNH_2$, n eine Zahl von Null bis 3, und Y —OH, Halogen, $NO_2$, —CN, $NH_2$, —NHCO—R, —NHCOOR oder $—NH—SO_2—R$ darstellt, worin R ein gegebenenfalls halogenierter niederer Alkylrest ist.

Die niederen Alkylreste R oder als Bestandteile von Alkoxy-, Alkylthio- und Alkylaminogruppen $R_1$, und $R_2$ weisen 1 bis 4 C-Atome auf, sind also Methyl, Aethyl, n-Propyl, Isopropyl oder einer der vier möglichen Butylreste. Halogenalkylreste R sind beispielsweise $—CH_2Cl$ und $CF_3$.

Halogenatome X bzw. Y sind Chlor, Brom oder Jod, vorzugsweise Chlor.

Besonders interessant und bevorzugt als herbizide Wirkstoffe sind Verbindungen, in denen n = 2 ist und die beiden Reste X (als $X_1$ und $X_2$) in ortho- und para-Stellung des Phenoxyrests stehen und die beiden X unabhängig voneinander je durch $NO_2$, CN, $CF_3$ und Halogen, insbesondere Chlor verkörpert sind.

Ganz besonderes Interesse haben 2-substituierte 5-(2'-Halogen-4'-trifluormethyl-phenoxy)-phenylphosphonsäurederivate der Formel IV

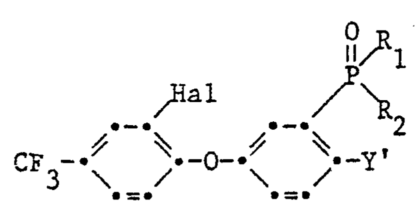

(IV)

worin Hal ein Halogenatom, insbesondere Chlor und Y' ein Halogenatom, die Cyano- und insbesondere die Nitrogruppe bedeuten. Unter diesen Verbindungen stehen wieder diejenigen im Vordergrund, in denen $R_1$ und $R_2$ je niedere ($C_1$-$C_3$) Alkoxyreste sind, wie die Dimethyl-, Diäthyl- und Dipropylester der 2-Nitro-5-(2'-chlor-4'-trifluormethyl-phenoxy)-phenylphosphonsäure.

Die Herstellung der neuen Phosphonsäurederivate der Formel I erfolgt in Analogie zur bekannten Herstellung von 2-Nitro-phenylphosphonsäuren (J. Chem. Soc. (C), *1969*, 1314), indem man ein 1,2-Dinitro-5-phenoxy-benzol (3,4-Dinitro-diphenyläther) der Formel II

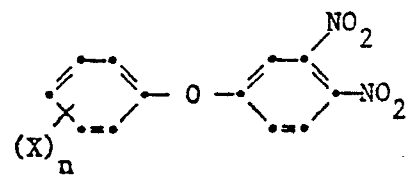
(II)

mit einem Trialkylphosphit $P(OR')_3$, worin R' niedere Alkylreste bedeuten, unter Abspaltung eines Moles einer Verbindung R'—O—N=O in einen Dialkyl-ester einer 2-Nitro-5-Phenoxy-phenylphosphonsäure der Formel III

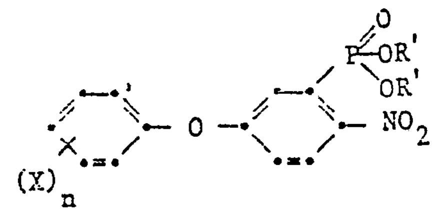
(III)

überführt, und gewünschtenfalls diesen Phosphonsäure-dialkylester-Rest in an sich bekannter Weise in die entsprechende freie Phosphonsäure oder in ein anderes erfindungsgemässes Derivat dieser Säure gemäss den Definitionen für $R_1$ und $R_2$ in der Formel I überführt. Gewünschtenfalls kann auch die verbleibende 2-ständige Nitrogruppe durch einen anderen Rest Y ersetzt werden.

Bei obiger Umsetzung, welche bei Temperaturen zwischen 50° und 150 °C, vorzugsweise zwischen 70° und 120 °C durchgeführt wird, entsteht unter Abspaltung eines Mols R'—O—N=O aus der zur Phenoxygruppe meta-ständigen Nitrogruppe die meta-ständige Phosphonsäureestergruppe, während die zur Phenoxygruppe para-ständige Nitrogruppe erhalten bleibt. Dies geht aus spektroskopischen Daten klar hervor. Die Umsetzung mit dem Trialkylphosphit kann ohne Anwesenheit eines Lösungsmittels, vorzugsweise jedoch in einem organischen aprotischen Lösungsmittel, wie Acetonitril, Benzol, Toluol etc. durchgeführt werden.

Die Herstellung der Ausgangsstoffe der Formel II erfolgt entsprechend den Ausführungen der Europäischen Patentanmeldung Nr. 79102225.4 nach folgendem Reaktionsschema :

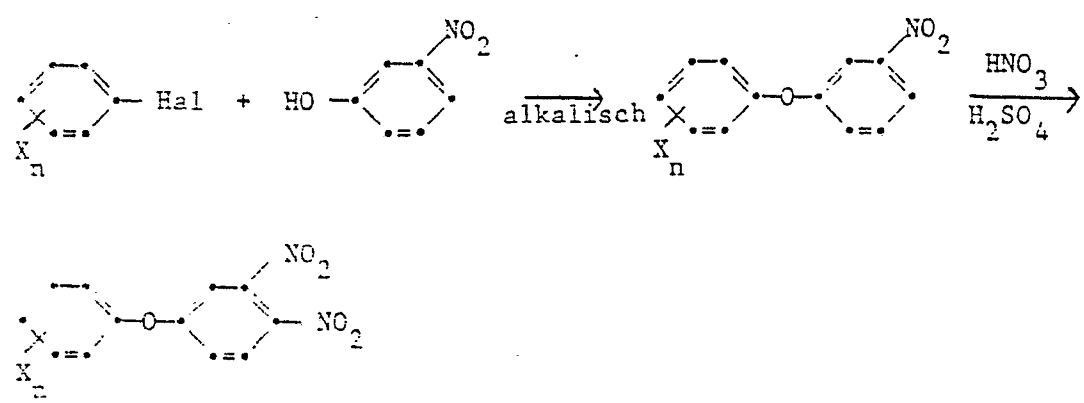


also durch Nitrierung eines 3-Nitrodiphenyläthers, welcher aus einem Halogenbenzol und 3-Nitrophenol hergestellt wurde.

Die in 2-Stellung des Produktes der Formel III befindliche Nitrogruppe ($Y=NO_2$) kann gewünschtenfalls in eine andere Gruppe Y umgewandelt werden. Mit Wasserstoff lässt sie sich katalytisch (Ni- oder Pd-Katalysatoren) zur Aminogruppe ($—NH_2$) reduzieren, welche wiederum acyliert werden kann unter Verwendung von niederen Fettsäurehalogeniden und Chlorameisensäurealkylestern oder Alkylsulfonsäurehalogeniden (Y= —NHCOR, —NHCOOR und $—NH—SO_2—R$).

Zum Austausch der Aminogruppe durch Halogen oder Cyan wird diese mit Natriumnitrit sauer diazotiert und das Diazoniumsalz in bekannter Weise nach Sandmeyer mit CuCN oder einem Kupferhalogenid (CuJ) umgesetzt, wobei Derivate entstehen, in denen Y Halogen, die Cyanogruppe oder die Hydroxylgruppe darstellt.

Die Phosphonat-Estergruppe lässt sich durch Behandeln mit 2 Mol $SOCl_2$ in Gegenwart von

Dimethylformamid als Katalysator bei erhöhter Temperatur (USA-Patentanmeldung Ser. No. 944 232) leicht in das Phosphonsäuredichlorid umwandeln ($R_1$, $R_2$ = Cl). Durch Umsetzung dieses Dichlorids mit primären oder sekundären Alkylaminen, Alkoholen, Mercaptanen oder Wasser lässt sich ein Chloratom oder lassen sich die beiden Chloratome stufenweise ersetzen, und zwar durch gleiche oder verschiedene Reste aus den Gruppen Alkylamino, Dialkylamino, Alkoxy, Alkylthio, Hydroxyl, Benzyloxy oder Benzylthio etc.

Die freie Phosphonsäure ($R_1$, $R_2$ = OH) erhält man auch direkt aus dem Dialkylester durch Behandeln mit konz. Salzsäure oder $(CH_3)_3SiBr$ und anschliessende Hydrolyse der Silylester mit Wasser.

Sowohl die Ester wie auch die freien Säuren und ihre Derivate der Formel I zeigen eine ausgezeichnete herbizide Wirkung, und zwar sowohl bei pre- als auch bei post-emergenter Anwendung.

Die nachfolgenden Beispiele veranschaulichen die Herstellung einiger erfindungsgemässer 2-substituierter 5-Phenoxy-phenylphosphonsäurederivate der Formel I. Weitere in entsprechender Weise hergestellte Wirkstoffe der Formel I sind in der anschliessenden Tabelle aufgeführt. Temperaturangaben beziehen sich jeweils auf Celsius-Grade.

Beispiel 1

2-Nitro-5-(2'-nitro-4'-trifluormethyl-phenoxy)-phenyl-phosphonsäure-diäthylester.

Eine Mischung aus 9 g (24,1 mMol) 3,4-Dinitro-2'-nitro-4'-trifluormethyl-diphenyläther (1,2-Dinitro-5-(2'-nitro-4'-trifluormethylphenoxy)-benzol (Fp 113-114°) und 4 g (24,1 mMol) Triäthylphosphit $(C_2H_5O)_3P$ wurde in 50 ml Toluol unter Stickstoff 19 Stunden zum Rückfluss erhitzt und dann wurde das Lösungsmittel unter reduziertem Druck abgedampft. Der erhaltene Rückstand (10,2 g) wurde durch Säulenchromatographie an Kieselgel 60 mit Essigester/Hexan 4 : 1 gereinigt. Zunächst wurde das nicht umgesetzte Ausgangsmaterial (3,45 g Dinitroderivat) und dann der gewünschte Phosphonsäurediäthylester (5,75 g = 51,3 % d.Th.) eluiert. Das erhaltene Endprodukt stellt vorerst ein viskoses gelb-rötliches Oel dar, welches durch Abdampfen des Lösungsmittelgemisches rein erhalten wurde, und das nach längerem Stehen kristallisiert und gelbe Kristalle vom Fp. 72-74° bildet.

Als Nachlauffraktion wurden noch 0,3 g Triäthylphosphit zurückerhalten.

Analyse des Endproduktes $C_{17}H_{16}F_3N_2O_8P$ (464,29) :

ber. : C 43,98 H 3,47 N 6,03 F 12,28 %

gef. : C 43,6 H 3,6 N 6,1 F 12,0 %

$^1$H-NMR ($CDCl_3$) : δ 1,3 (t,6H,$CH_3$) ; 4,2 (quin., 4H,$OCH_2$)
7,1-8,4 (m,6H,$C_6H_3$) ppm

Beispiel 2

2-Nitro-5-(2'-nitro-4'-chlorphenoxy)-phenyl-phosphonsäure-diäthylester.

Eine Mischung aus 7,5 g (22,08 mMol) 3,4-Dinitro-2'-nitro-4'-chlor-diphenyläther und 3,67 g (22,08 mMol) Triäthylphosphit $(C_2H_5O)_3P$ wurde in 50 ml Acetonitril 19 Stunden am Rückfluss erhitzt. Nach Abdampfen des Lösungsmittels wurde der ölige schwarze Rückstand (9 g) an einer Kieselgelsäule mit Essigester/Hexan 4 : 1 chromatographiert. Neben 1,75 g nicht umgesetztem Trinitroderivat wurden 5,8 g (61,0 %) eines honigartigen rotstichigen Oels erhalten, welches nach Stehen kristallisiert, den Fp 76-78° besitzt und das gewünschte Endprodukt darstellt.

Analyse : $C_{16}H_{16}Cl\ N_2O_8P$ (430,74)

ber. : C 44,62 H 3,75 N 6,51 Cl 8,23 %

gef. : C 44,5 H 4,0 N 6,6 Cl 8,1 %

$^1$H-NMR ($CDCl_3$) δ 1,35 (t,6H,$CH_3$) ; 4,23 (quin. 4H, $OCH_2$)
7,1-8,3 (m,$C_6H_3$, 6H) ppm.

Beispiel 3

2-Nitro-5-(2'-nitro-4'-trifluormethylphenoxy)-phenyl-phosphonsäure.

Eine Mischung aus 1,85 g des nach Beispiel 1 erhaltenen 2-Nitro-5-(2'-nitro-4'-trifluormethylphenoxy)-phenyl-phosphonsäure-diäthylesters in 20 ml Aethanol und 40 ml 20 %-ige Salzsäure wurde 24 Stunden am Rückfluss erhitzt und dann zur Trockne eingedampft. Als Rückstand wurde das Monohydrat der entsprechenden freien Phosphonsäure in Form gelb-brauner Kristalle vom Fp 175-180° in quantitativer Ausbeute erhalten.

Analyse : $C_{13}H_8F_3N_2O_8P$ . $H_2O$ (426,18)

ber. : C 36,9 H 2,53 N 6,57 P 7,26 %

gef. : C 37,9 H 2,5 N 6,7 P 7,5 %

Beispiel 4

2-Nitro-5-(2'-cyano-4'-trifluormethylphenoxy)-phenyl-phosphonsäure.

Gemäss den Angaben des Beispiels 1 wird ausgehend von 3,4-Dinitro-2'-cyano-4'-trifluormethyl-diphenyläther (Fp 108-110°) und Triäthylphosphit der 2-Nitro-5-(2'-cyano-4'-trifluormethyl-phenoxy)-phenylphosphonsäure-diäthylester (gelb-rotes Oel) hergestellt (Ausbeute 48 %).

Eine Mischung von 1,6 g dieses Esters und 1,5 ml $(CH_3)_3SiBr$ wird über Nacht bei Raumtemperatur gerührt und dann eingedampft. Der Rückstand wird in Aceton gelöst, mit Wasser versetzt und wieder eingedampft. Man erhält auf diese Weise 1,2 g (82 %) 2-Nitro-5-(2'-cyano-4'-trifluormethyl-phenoxy)-phenyl-phosphonsäure-Monohydrat vom Fp 227°.

Analyse : $C_{14}H_8F_3N_2O_6P . H_2O$ (406,2)
ber. C 41,4 H 2,48 N 6,9 P 7,62 %
gef. : C 41,4 H 2,4 N 6,9 P 7,6 %

## Beispiel 5

2-Amino-5-(2'-chlor-4'-trifluormethyl-phenoxy)-phenyl-phosphonsäuredimethylester.

Gemäss Angaben des Beispiels 1 wird ausgehend von 3,4-Dinitro-2'-chlor-4'-trifluormethyl-diphenyläther und Trimethylphosphit der 2-Nitro-5-(2'-chlor-4'-trifluormethylphenoxy)-phenyl-phosphonsäuredimethylester vom Fp. 83° hergestellt (Ausbeute 36,6 %).

10 g dieser Verbindung werden dann in Methanol in Gegenwart von Pd-Kohle als Katalysator bei Zimmertemperatur hydriert. Nach Aufnahme von 109 % der Theorie an Wasserstoff wird der Katalysator abfiltriert und das Filtrat eingedampft. Man erhält 9,2 g (100 % d.Th.) der obigen 2-Amino-Verbindung als braunes Oel, das nach Chromatographie an Silicagel als leicht gelbes Oel erscheint.

$^1$H-NMR in $CDCl_3$ : δ 3,75 (d ; $J_{POCH}$ 11,5 ; 6H ; $OCH_3$) ;
5,10 (s, 2H, $NH_2$) ; 6,6-7,7 (m, 6H, $C_6H_3$) ppm.

In der folgenden Tabelle sind diese und weitere in analoger Weise hergestellte Verbindungen der Formel

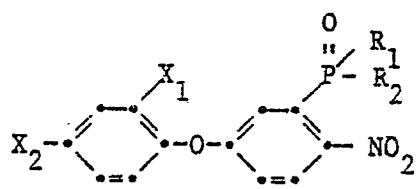

zusammengestellt :

| Verbindung No. | $X_1$ | $X_2$ | $R_1$ und $R_2$ | physikalische Konstanten |
|---|---|---|---|---|
| 1 | $NO_2$ | $CF_3$ | $OC_2H_5$ | Fp 72-74° |
| 2 | $NO_2$ | Cl | $OC_2H_5$ | Fp 76-78° |
| 3 | $NO_2$ | $CF_3$ | OH | Fp 175-180° (Monohydrat) |
| 4 | CN | $CF_3$ | $OC_2H_5$ | gelb-rotes Oel |
| 5 | CN | $CF_3$ | OH | Fp 227° (Monohydrat) |
| 6 | $NO_2$ | $CF_3$ | $OC_3H_7$(iso) | Fp 93-102° |
| 7 | Cl | $CF_3$ | $OC_2H_5$ | Fp 61-63° |
| 8 | $-CONH_2$ | $NO_2$ | $OC_2H_5$ | Fp 137-140° |
| 9 | $CF_3$ | $NO_2$ | $OC_2H_5$ | Fp 84-88° |
| 10 | Cl | $CF_3$ | $OCH_3$ | Fp 83° |
| 11 | Cl | $CF_3$ | $OC_3H_7$(iso) | viskoses Oel |
| 12 | $NO_2$ | Cl | OH | Fp 170-174° |
| 13 | Cl | $CF_3$ | OH | 2,5 Hydrat: Fp 105-107° |
| 14 | $CF_3$ | $NO_2$ | OH | Fp 80° (hygroskopisch) |
| 15 | Cl | $CF_3$ | $-NH-C_3H_7$iso | Fp 127-128° |

Weitere ausgewählte Wirkstoffe der allgemeinen Formel

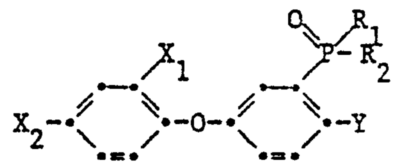

sind in folgender Tabelle aufgeführt :

| Verb.No. | $X_1$ | $X_2$ | $R_1$ | $R_2$ | Y | physikal. Konstanten |
|---|---|---|---|---|---|---|
| 16 | Cl | $CF_3$ | $-N(C_2H_5)_2$ | $-OCH_3$ | $NO_2$ | Oel |
| 17 | Cl | $CF_3$ | Cl | Cl | $NO_2$ | |
| 18 | Cl | $CF_3$ | $-NHC_2H_5$ | $-NHC_2H_5$ | $NO_2$ | |
| 19 | Cl | $CF_3$ | -S-Benzyl | -S-Benzyl | $NO_2$ | |
| 20 | Cl | $CF_3$ | $-N(CH_3)_2$ | $-N(CH_3)_2$ | $NO_2$ | |
| 21 | Cl | $CF_3$ | $-OC_2H_5$ | -S-Benzyl | $NO_2$ | |
| 22 | Cl | $CF_3$ | $-OC_2H_5$ | $-N(C_2H_5)_2$ | $NO_2$ | |
| 23 | Cl | $CF_3$ | $-OCH_3$ | $-OCH_3$ | $NH_2$ | Oel |
| 24 | Cl | $CF_3$ | $-OC_2H_5$ | $-OC_2H_5$ | $NH_2$ | |
| 25 | Cl | $CF_3$ | $-OCH_3$ | $-OCH_3$ | $-NHCOCH_2Cl$ | Oel |
| 26 | Cl | $CF_3$ | $-OC_2H_5$ | $-OC_2H_5$ | $-NHCOCH_2Cl$ | |
| 27 | Cl | $CF_3$ | $-OCH_3$ | $-OCH_3$ | $-NHSO_2CF_3$ | |
| 28 | Cl | $CF_3$ | $-OC_2H_5$ | $-OC_2H_5$ | $-NHSO_2CF_3$ | |
| 29 | Cl | $CF_3$ | $-OCH_3$ | $-OCH_3$ | -OH | |
| 30 | Cl | $CF_3$ | $-OC_2H_5$ | $-OC_2H_5$ | -OH | |
| 31 | Cl | $CF_3$ | $-OCH_3$ | $-OCH_3$ | Cl | |
| 32 | Cl | $CF_3$ | $-OC_2H_5$ | $-OC_2H_5$ | Cl | |
| 33 | Cl | $CF_3$ | $-OCH_3$ | $-OCH_3$ | Br | |
| 34 | Cl | $CF_3$ | $-OC_2H_5$ | $-OC_2H_5$ | Br | |
| 35 | Cl | $CF_3$ | $-OCH_3$ | $-OCH_3$ | J | |

| Verb.No. | $X_1$ | $X_2$ | $R_1$ | $R_2$ | Y | physikal. Konstanten |
|---|---|---|---|---|---|---|
| 36 | Cl | $CF_3$ | $-OC_2H_5$ | $-OC_2H_5$ | J | |
| 37 | Cl | $CF_3$ | $-OCH_3$ | $-OCH_3$ | CN | |
| 38 | Cl | $CF_3$ | $-OC_2H_5$ | $-OC_2H_5$ | CN | |

Die neuen Phosphonsäurederivate der Formel I sind unterhalb 160° stabile Verbindungen, welche in üblichen organischen Lösungsmitteln löslich sind.

Zur Verwendung als Herbizide oder Pflanzenwachstumsregulatoren können die neuen Wirkstoffe für sich allein, vorzugsweise jedoch zusammen mit geeigneten Trägerstoffen und/oder anderen Zuschlagstoffen in Form sogenannter Mittel verwendet werden.

Besonders im Vordergrund steht die Verwendung als pre- und insbesondere postemergentes Herbizid, wobei viele der Wirkstoffe transloziert werden. Als Pflanzenregulatoren wirken die Wirkstoffe bei niederen Aufwandmengen insbesondere im Sinne von Wachstumshemmern für mono- und dicotyle Pflanzen, sowie zur Desiccation oberirdischer Pflanzenteile.

Viele der neuen Wirkstoffe der Formel I, insbesondere solche der engeren Formel IV zeigen eher geringe Selektivität, eignen sich dafür aber ausgezeichnet als post-emergente « knock-down »-Mittel zur raschen und totalen Vernichtung und Abbrennung (Desiccation) unerwünschter oder zu ersetzender Pflanzendecken und Pflanzenbestände am Boden.

Ein solches Einsatzgebiet ist beispielsweise die Vernichtung von Convolvulus-Arten in Rebbergen, wo z.B. die Verbindung No. 10 der Tabelle mit 2 kg/ha einen 95 %-igen Effekt ergibt.

Ein noch wichtigeres Einsatzgebiet, welches sich durch die rasche und totale Kontaktwirkung der neuen Wirkstoffe, insbesondere jener der Formel IV erschliesst, ist die Totalerneuerung einer abgeernteten Anbaufläche oder einer Weide durch rasche Vernichtung (Abbrand) der gesamten Flora und Neueinsaat einer anderen Kultur ohne vorhergehendes Umpflügen.

Nach diesem « no tillage » System (pflugloser Ackerbau) wird vor der Neu-Einsaat nicht mehr gepflügt. Statt durch den Pflug werden die Unkrautdecke oder die Pflanzenrestbestände einer vorherigen abgeernteten Getreidekultur (Stoppeln) durch rasch wirkende Herbizide in wenigen Tagen (bis höchstens 2 Wochen) total vernichtet (Abbrand). In die so abgetrocknete Pflanzendecke wird eine neue Kultur dann mit speziellen Sämaschinen in Reihen eingesät.

Dieses Verfahren drängt sich auf in durch Wind und Wasser erosionsgefährdeten Gebieten, ferner wo der Aufwand an Maschinen, Energie und Arbeit reduziert werden soll und insbesondere in Gebieten, wo nach der Ernte einer ersten Kultur die Folgekultur rasch eingebracht werden muss, wie in einer Fruchtfolge :

Weizen → Soja oder Mais oder Baumwolle,
Gras → Soja oder Mais oder Baumwolle
(Weide oder Kunstwiese)
Soja-Stoppeln → Mais
Mais-Stoppeln → Soja

Meist wird nicht nur ein Herbizid allein, sondern eine Mischung von 3 Herbiziden angewendet. Eine der Komponenten ist dabei immer ein schnell wirksames Herbizid ; dazu diente bisher in erster Linie Paraquat, dem z.B. Atrazin oder ein Acetanilid zugemischt wird.

Viele Wirkstoffe vorliegender Erfindung, insbesondere solche der Formel IV, wie z.B. Verbindung No. 10 besitzen Eigenschaften, die sie befähigen, im oben zitierten pfluglosen Ackerbau (no tillage system) die Rolle des Paraquat voll zu übernehmen, ohne dessen Nachteile (toxische Wirkung auf Warmblüter) in gleichem Masse aufzuweisen.

Die Herstellung erfindungsgemässer Mittel erfolgt in an sich bekannter Weise durch inniges Vermischen und Vermahlen von Wirkstoffen der allgemeinen Formel I mit geeigneten Trägerstoffen und/oder Verteilungsmitteln, gegebenenfalls unter Zusatz von gegenüber den Wirkstoffen inerten Antischaum-, Netz-, Dispersions- und/oder Lösungsmitteln. Die Wirkstoffe können in den folgenden Aufarbeitungsformen vorliegen und angewendet werden :

Feste Aufarbeitungsformen : Stäubemittel, Streumittel, Granulate, Umhüllungsgranulate, Imprägniergranulate und Homogengranulate ;

in Wasser dispergierbare Wirkstoffkonzentrate : Spritzpulver (wettabele powder), Pasten, Emulsionen ; Emulsionskonzentrate ;

flüssige Aufarbeitungsformen : Lösungen.

Die Wirkstoffkonzentrationen betragen in den handelsüblichen erfindungsgemässen Mitteln 1 bis 80 Gewichtsprozent und können vor der Anwendung auf niedrigere Konzentrationen von etwa 0,05 bis 1 % verdünnt werden.

Den beschriebenen erfindungsgemässen Mitteln lassen sich andere biozide Wirkstoffe beimischen. So können die neuen Mittel ausser den genannten Verbindungen der allgemeinen Formel I z.B. Insektizide, Fungizide, Bakterizide, Fungistatika, Bakteriostatika, Nematozide oder weitere Herbizide zur Verbreiterung des Wirkungsspektrums enthalten.

Die Herstellung erfindungsgemässer Mittel sei durch Beispiele zur Herstellung fester und flüssiger Aufbereitungsformen näher erläutert.

Granulat

Zur Herstellung eines 5 %igen Granulates werden die folgenden Stoffe verwendet :

5 Teile eines der Wirkstoffe der Formel I,
0,25 Teile Epichlorhydrin,
0,25 Teile Cetylpolyglykoläther,
3,50 Teile Polyäthylenglykol,
91 Teile Kaolin (Korngrösse : 0,3-0,8 mm)

Die Aktivsubstanz wird mit Epichlorhydrin vermischt und in 6 Teilen Aceton gelöst, hierauf wird Polyäthylenglykol und Cetylpolyglykoläther zugesetzt. Die so erhaltene Lösung wird auf Kaolin aufgesprüht und anschliessend im Vakuum verdampft.

Spritzpulver

Zur Herstellung eines a) 70 %igen und b) 10 %igen Spritzpulvers werden folgende Bestandteile verwendet :

a) 70 Teile 2-Nitro-5-(2'-chlor-4'-trifluormethyl-phenoxy)-phenyl-phosphonsäurediäthylester
5 Teile Natriumdibutylnaphthylsulfonat,
3 Teile Naphthalinsulfonsäuren-Phenolsulfonsäuren-Formaldehyd-Kondensat 3 : 2 : 1,
10 Teile Kaolin,
12 Teile Champagne-Kreide ;

b) 10 Teile 2-Nitro-5-(2'-chlor-4'-trifluormethyl-phenoxy)-phenyl-phosphonsäure,
3 Teile Gemisch der Natriumsalze von gesättigten Fettalkoholsulfaten,
5 Teile Naphthalinsulfonsäuren-Formaldehyd-Kondensat,
82 Teile Kaolin.

Der angegebene Wirkstoff wird auf die entsprechenden Trägerstoffe (Kaolin und Kreide) aufgezogen und anschliessend vermischt und vermahlen. Man erhält Spritzpulver von vorzüglicher Benetzbarkeit und Schwebefähigkeit. Aus solchen Spritzpulvern können durch Verdünnung mit Wasser Suspensionen von 0,1-8 % Wirkstoff erhalten werden, die sich zur Unkrautbekämpfung in Pflanzenkulturen eignen.

Paste

Zur Herstellung einer 45 %igen Paste werden folgende Stoffe verwendet :

45 Teile 2-Nitro-5-(2'-chlor-4'-trifluormethyl-phenoxy)-phenyl-phosphonsäuredimethylester oder ein anderer Wirkstoff der Formel I,
5 Teile Natriumaluminiumsilikat,
14 Teile Cetylpolyglykoläther mit 8 Mol Aethylenoxid,
1 Teil Oleylpolyglykoläther mit 5 Mol Aethylenoxid,
2 Teile Spindeloel,
10 Teile Polyäthylenglykol,
23 Teile Wasser.

Der Wirkstoff wird mit den Zuschlagstoffen in dazu geeigneten Geräten innig vermischt und vermahlen. Man erhält eine Paste, aus der sich durch Verdünnen mit Wasser Suspensionen jeder gewünschten Konzentration herstellen lassen.

Emulsionskonzentrat

Zur Herstellung eines 25 %igen Emulsionskonzentrates werden

25 Teile 2-Nitro-5-(2'-nitro-4'-trifluormethyl-phenoxy)-phenyl-phosphonsäure-di-isopropylester,
5 Teile einer Mischung von Nonylphenolpolyoxyäthylen oder Calciumdodecylbenzolsulfat,
15 Teile Cyclohexanon,
55 Teile Xylol

miteinander vermischt. Dieses Konzentrat kann mit Wasser zu Emulsionen auf geeignete Konzentrationen von z.B. 0,1 bis 10 % verdünnt werden. Solche Emulsionen eignen sich zur Bekämpfung von Unkräutern in Kulturpflanzungen.

Zum Nachweis der Brauchbarkeit als Herbizide (pre- und post-emergent) dienen folgende Testmethoden :

Pre-emergente Herbizid-Wirkung (Keimhemmung)

Im Gewächshaus wird unmittelbar nach der Einsaat der Versuchspflanzen in Saatschalen die Erdoberfläche mit einer wässerigen Dispersion der Wirkstoffe, erhalten aus einem 25 %igen Emulsionskonzentrat resp. aus einem 25 %igen Spritzpulver von Wirkstoffen, die wegen ungenügender Löslichkeit nicht als Emulsionskonzentrat hergestellt werden können, behandelt. Es wurden vier verschiedene Konzentrationsreihen angewendet, entsprechend 4, 2, 1 und 0,5 kg Wirksubstanz pro Hektar. Die Saatschalen werden im Gewächshaus bei 22-25 °C und 50-70 % rel. Luftfeuchtigkeit gehalten und der Versuch nach 3 Wochen ausgewertet und die Resultate nach folgender Notenskala bonitiert :

1 = Pflanzen nicht gekeimt oder total abgestorben
2-3 = sehr starke Wirkung
4-6 = mittlere Wirkung
7-8 = geringe Wirkung
9 = keine Wirkung (wie unbehandelte Kontrolle)
- = Pflanze in entsprechender Wirkstoffkonzentration nicht geprüft.

Während z.B. die erfindungsgemässen Wirkstoffe Nos. 6 und 7 bei 4 kg/ha auf Sinapis, Setaria und Stellaria Noten zwischen 1 und 4 erzielten, besassen die aus der DOS 2 619 841 bekannt gewordenen Vergleichssubstanzen 2-Nitro-phenylphosphonsäure und 2-Nitro-5-chlor-phenyl-phosphonsäurediäthylester überhaupt keine Herbizidwirkung (Noten 9), während 2-Nitro-phenylphosphonsäurediäthylester ungenügende Noten von 6 bis 9 aufwies.

Post-emergente Herbizid-Wirkung (Kontaktherbizid)

Eine grössere Anzahl (mindestens 7) Unkräuter und Kulturpflanzen, sowohl monocotyle wie dicotyle, wurden nach dem Auflaufen (im 4- bis 6-Blattstadium) mit einer wässerigen Wirkstoffdispersion in Dosierungen von 0,06 ; 0,125 ; 0,25 ; 0,5 kg Wirksubstanz pro Hektar auf die Pflanze gespritzt und diese bei 24-26 °C und 45-60 % rel. Luftfeuchtigkeit gehalten. Mindestens 15 Tage nach Behandlung wird der Versuch ausgewertet und das Ergebnis wie im pre-emergent-Versuch nach derselben Notenskala bonitiert.

Sowohl im pre- als auch im post-emergenten Test zeigten die untersuchten Verbindungen, wie z.B. die Verbindungen Nos. 3, 6, 7 und 10 sehr gute Unkrautwirkung auf monocotyle und dicotyle Unkräuter bei teilweise guter Selektivität in Soja, Baumwolle und Getreidearten einschliesslich Reis und Mais. Die Verbindung No. 7 zeigte insbesondere auch in Reis bei Aufwandmengen von 1 bis 2 kg/ha eine hervorragende Selektivität (Noten zwischen 7 und 9) bei praktisch völliger Vernichtung der Reis-Unkräuter Echinochloa, Cyperus, Ammania indica und Rotala indica (Noten 1 bis 3).

Von den im obigen Test erwähnten drei Vergleichssubstanzen der DOS 2 619 841 zeigte im post-emergenten Test nur 2-Nitro-5-chlor-phenyl-phosphonsäurediäthylester schwache post-emergente Herbizidwirkung ohne erkennbare Selektivität.

**Ansprüche** (für die Vertragsstaaten : BE, CH, DE, FR, GB, IT, NL)

1. Neue 2-substituierte 5-Phenoxy-phenyl-phosphonsäurederivate der Formel I

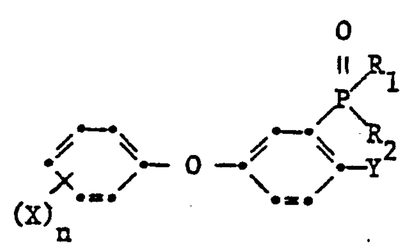

(I)

worin $R_1$ und $R_2$ unabhängig voneinander je Hydroxylgruppen, niedere Alkoxy-, Alkylthio-, Alkylamino- oder Dialkylamino-Gruppen, sowie Chlor, Benzyloxy oder Benzylthio, X Halogen oder eine Gruppe $-CF_3$, $-NO_2$, $-CN$, $-CONH_2$ oder $-CSNH_2$, n eine ganze Zahl von Null bis 3, und Y Halogen oder eine der Gruppen $-NO_2$, $-OH$, $-NH_2$, $-NH-CO-R$, $-NH-COOR$ oder $-NHSO_2-R$ darstellt, worin R ein gegebenenfalls halogenierter niederer Alkylrest ist.

2. Phosphonsäurederivate gemäss Anspruch 1, dadurch gekennzeichmet, das in der Formel I n die Zahl 2 ist und die beiden Reste X in ortho- und para-Stellung im Phenoxyrest stehen und unabhängig voneinander je $-NO_2$, $-CN$, $-CF_3$ und Halogen bedeuten.

3. 5-(2'-Halogen-4'-trifluormethyl-phenoxy)-phenyl-phosphonsäurederivate gemäss Anspruch 2, von der Formel

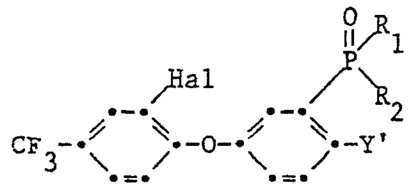

(IV)

worin Y' Halogen, die Nitro- oder Cyanogruppe bedeutet und $R_1$ und $R_2$ wie unter formel I definiert sind.

4. Phosphonsäurederivate gemäss Anspruch 3, dadurch gekennzeichnet, dass Hal in der Formel IV ein Chloratom ist.

5. Phosphonsäurederivate gemäss Anspruch 3, dadurch gekennzeichnet, dass Y' in der Formel IV durch die Nitrogruppe verkörpert ist.

6. 2-Nitro-5-(2'-chlor-4'-trifluormethyl-phenoxy)-phenyl-phosphonsäurederivate der Formel

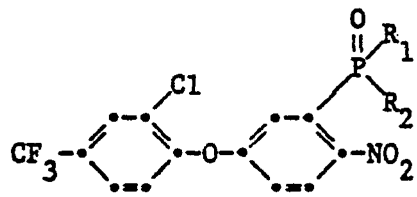

worin $R_1$ und $R_2$ $C_1$-$C_3$ Alkoxyreste darstellen.

7. Die Verbindung 2-Nitro-5-(2'-chlor-4'-trifluormethyl-phenoxy)-phenyl-phosphonsäuredimethylester.

8. Verfahren zur Herstellung der 2-substituierten 5-Phenoxy-phenyl-phosphonsäurederivate der Formel I des Anspruchs 1, dadurch gekennzeichnet, dass man einen 3,4-Dinitro-diphenyläther der Formel II

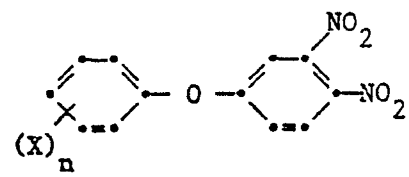

(II)

mit einem Trialkylphosphit $P(OR')_3$ umsetzt, worin R' niedere Alkylreste bedeuten, wobei unter Abspaltung eines Mols einer Verbindung R'—O—N=O ein Dialkylester einer 2-Nitro-5-phenoxy-phenylphosphonsäure der Formel III

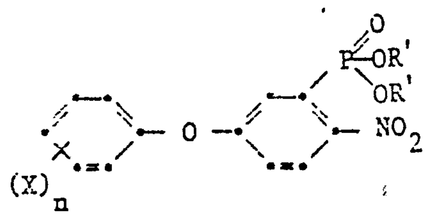

(III)

entsteht, und dass man gewünschtenfalls diesen Phosphonsäuredialkylester in an sich bekannter Weise in die entsprechende freie Phosphonsäure oder in ein anderes Derivat dieser Säure gemäss den definitionen für $R_1$ und $R_2$ der Formel I überführt und/oder die 2-ständige Nitrogruppe gewünschtenfalls in an sich bekannter Weise durch einen anderen Rest Y gemäss Definition unter Formel I ersetzt.

9. Herbizides und das Pflanzenwachstum regulierendes Mittel, dadurch gekennzeichnet, dass es als aktive Komponente ein 2-substituiertes 5-Phenoxy-phenyl-phosphonsäurederivat der Formel I des Anspruch 1 enthält.

10. Mittel gemäss Anspruch 9, dadurch gekennzeichnet, dass es als aktive Komponente 2-Nitro-5-(2'-chlor-5'-trifluormethyl-phenoxy)-phenylphosphonsäure oder einen niederen Dialkylester dieser Säure enthält.

11. Die Verwendung der neuen phosphonsäurederivate der Formel I und der sie enthaltenden Mittel zur pre- und post-emergenten Unkrautbekämpfung in dicotylen und monocotylen Kulturpflanzenbeständen, sowie zur Wachstumshemmung und Desiccation oberirdischer Pflanzenteile.

12. Die Verwendung der neuen Phosphonsäurederivate der Formel I und der sie enthaltenden Mittel zur post-emergenten totalen Vernichtung bestehenden Pflanzenwuchses zwecks Vorbereitung von Anbauflächen für die Einsaat neuer Kulturen ohne vorhergehendes Umpflügen.

13. Verwendung gemäss Anspruch 12 von Mitteln mit einem Gehalt an Wirkstoffen gemäss Anspruch 6.

**Ansprüche** (für den Vertragstaaten AT)

1. Verfahren zur Herstellung von neuen 2-substituierten 5-Phenoxy-phenylphosphonsäurederivaten der Formel I

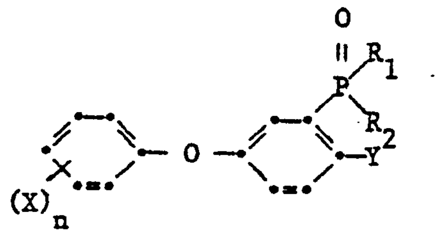

(I)

worin $R_1$ und $R_2$ unabhängig voneinander je Hydroxylgruppen, niedere Alkoxy-, Alkylthio-, Alkylamino- oder Dialkylamino-Gruppen, sowie Chlor, Benzyloxy oder Benzylthio, X Halogen oder eine Gruppe $—CF_3$, $—NO_2$, —CN, $—CONH_2$ oder $—CSNH_2$, n eine ganze Zahl von Null bis 3, und Y Halogen oder eine der Gruppen $—NO_2$, —OH, —CN, $—NH_2$, —NH—CO—R, —NH—COOR oder $—NHSO_2—R$ darstellt, worin R ein gegebenenfalls halogenierter niederer Alkylrest ist, dadurch gekennzeichnet, dass man einen 3,4-Dinitrodiphenyläther der Formel II

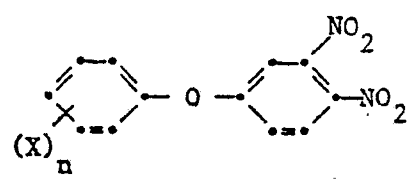

(II)

worin X und n wie oben definiert sind, mit einem Trialkylphosphit $P(OP')_3$, worin R' niedere Alkylreste bedeuten, bei Temperaturen zwischen 50 und 150 °C umsetzt, wobei unter Abspaltung eines Mols einer Verbindung R'—O—N=O ein Dialkylester einer 2-Nitro-5-phenoxy-phenylphosphonsäure der Formel III

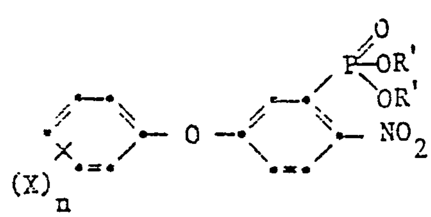

(III)

entsteht, und dass man gewünschtenfalls diesen Phosphonsäuredialkylester durch Nachoperationen in an sich bekannter Weise in die entsprechende freie Phosphonsäure oder in ein anderes den Definitionen von $R_1$ und $R_2$ entsprechendes Derivat dieser Säure überführt und/oder die 2-ständige nitrogruppe gewünschtenfalls durch einen anderen Rest Y gemäss Definition unter Formel I ersetzt.

2. Verfahren gemäss Anspruch 1, dadurch gekennzeichnet, dass man nach der Umsetzung mit dem Trialkylphosphit das erhaltene produkt der Formel III in Gegenwart von Pd-Kohle katalytisch hydriert, um die 2-ständige Nitrogruppe durch eine Aminogruppe zu ersetzen.

3. Verfahren gemäss Anspruch 1, dadurch gekennzeichnet, dass man als Ausgangsstoff der Formel II einen substituierten 3,4-Dinitro-diphenyläther der Formel

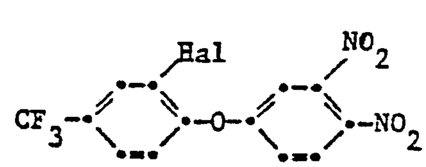

verwendet, um nach Umsetzung mit einem Trialkylphosphit $P(OR')_3$ zu niederen Dialkylestern einer 2-Nitro-5-(2'-Halogen-4'-trifluormethyl-phenoxy)-phenylphosphonsäure zu gelangen.

4. Herbizides und Pflanzenwuchs regulierendes Mittel, dadurch gekennzeichnet, dass es als aktive Komponente ein 2-substituiertes 5-Phenoxy-phenylphosphonsäurederivat der Formel I des Anspruchs 1 enthält.

5. Mittel gemäss Anspruch 4, dadurch gekennzeichnet, dass es einen Wirkstoff der Formel I enthält, in welcher n die Zahl 2 ist und die beiden Reste X in ortho- und para-Stellung stehen und unabhängig voneinander je $NO_2$, CN, $CF_3$ und Halogen bedeuten.

6. Mittel gemäss Ansprüchen 4 und 5, gekennzeichnet durch den Gehalt eines Wirkstoffs der Formel

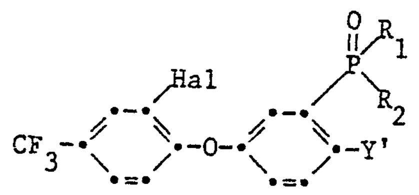

(IV)

worin Hal ein Halogenatom, insbesondere Chlor, und Y' Halogen, die Cyano- und die Nitrogruppe verkörpert.

7. Mittel gemäss Anspruch 6, gekennzeichnet durch den Gehalt eines Wirkstoffs der Formel IV, in der Hal ein Chloratom, Y' die Nitrogruppe und $R_1$ und $R_2$ Hydroxylgruppen oder niedere $C_1$-$C_3$ Alkoxyreste darstellen.

8. Die Verwendung der Mittel gemäss Anspruch 4 bis 7 zur pre- und post-emergenten Unkrautbekämpfung in dicotylen und monocotylen Kulturpflanzenbeständen sowie zur post-emergenten Wuchshemmung und Desiccation oberirdischer Pflanzenteile.

9. Die Verwendung der Mittel gemäss Anspruch 4 bis 7 zur post-emergenten totalen Vernichtung bestehenden Pflanzenwuchses bzw. Pflanzen-Restbeständen zwecks Vorbereitung von Anbauflächen für die Einsaat neuer Kulturen ohne vorhergehendes Umpflügen.

10. Verwendung gemäss Anspruch 9 von Mitteln gemäss Ansprüchen 6 und 7.

**Claims** (for the contracting States : BE, CH, DE, FR, GB, IT, NL)

1. A novel 2-substituted 5-phenoxyphenylphosphonic acid derivative of the formula

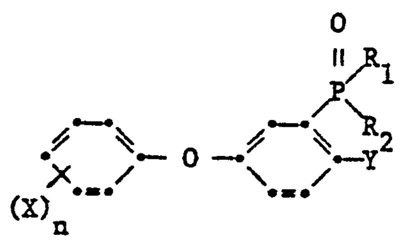

(I)

wherein each of $R_1$ and $R_2$ independently is hydroxyl, lower alkoxy, lower alkylthio, alkylamino or dialkylamino, and also chlorine, benzyloxy or benzylthio, X is halogen or a $—CF_3$, $—NO_2$, —CN, $—CONH_2$ or $—CSNH_2$ group, n is an integer from 0 to 3, and Y is halogen or one of the groups $NO_2$, —OH, —CN, $NH_2$, —NH—CO—R, —NH—COOR or $—NH—SO_2—R$, wherein R is an unsubstituted or halogenated lower alkyl radical.

2. A phosphonic acid derivative according to claim 1 of the formula I, wherein n is 2 and both radicals X are in the ortho- and para-position in the phenoxy moiety and each independently of the other is $—NO_2$, —CN, $—CF_3$ and halogen.

3. A 5-(2'-halogeno-4'-trifluoromethylphenoxy)-phenylphosphonic acid derivative according to claim 2, of the formula

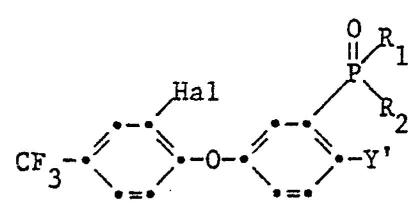

(IV)

wherein Y' is halogen, the nitro or cyano group, and $R_1$ and $R_2$ are as defined for formula I.

4. A phosphonic acid derivative according to claim 3, wherein Hal in formula IV is a chlorine atom.

5. A phosphonic acid derivative according to claim 3, wherein Y' in formula IV is the nitro group.

6. A 2-nitro-5-(2'-chloro-4'-trifluoromethylphenoxy)-phenylphosphonic acid derivative of the formula

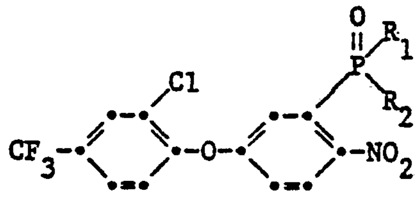

wherein $R_1$ and $R_2$ are $C_1$-$C_3$ alkoxy radicals.

7. 2-Nitro-5-(2'-chloro-4'-trifluoromethylphenoxy)-phenylphosphonic acid dimethyl ester.

8. A process for the production of a novel 2-substituted 5-phenoxyphenylphosphonic acid derivative of the formula I of claim 1, which process comprises reacting a 3,4-dinitrodiphenyl ether of the formula II

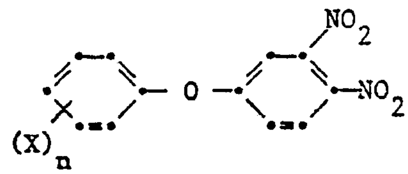

(II)

with a trialkylphosphite $P(OR')_3$, wherein R' is lower alkyl, to give a dialkyl ester of a 2-nitro-5-phenoxyphenylphosphonic acid of the formula III

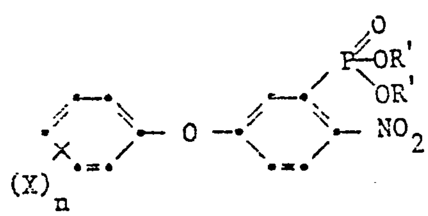

(III)

accompanied by the removal of one mole of a compound R'—O—N=O, and, if desired, converting said phosphonic acid dialkyl ester, in a manner known per se, into the corresponding free phosphonic acid, or into another derivative thereof, in accordance with the definitions of $R_1$ and $R_2$ in formula I, and/or, if desired, replacing the nitro group in the 2-position, in a mannerknown per se, by another radical Y in accordance with the definition of formula I.

9. A herbicidal and plant growth-regulating composition, wherein the active component is a 2-substituted 5-phenoxyphenylphosphonic acid derivative of the formula I of claim 1.

10. A composition according to claim 9, wherein the active component is 2-nitro-5-(2'-chloro-5'-trifluoromethylphenoxy)-phenylphosphonic acid or a lower dialkyl ester thereof.

11. A method of controlling weeds preemergence and post-emergence in crops of monocotyledonous and dicotyledonous cultivated plants, and of inhibiting plant growth and desiccating parts of plants above the soil, which method comprises the use of a phosphonic acid derivative of the formula I or of a composition containing it.

12. A method of totally destroying existing plant growth postemergence in order to prepare a crop area for sowing new crops without prior ploughing, which method comprises the use of a phosphonic acid derivative of the formula I or of a composition containing it.

13. A method according to claim 12, which comprises the use of a composition which contains a compound as claimed in claim 6.

**Claims** (for the contracting State AT)

1. A process for the production of a novel 2-substituted 5-phenoxyphenylphosphonic acid derivative of the formula

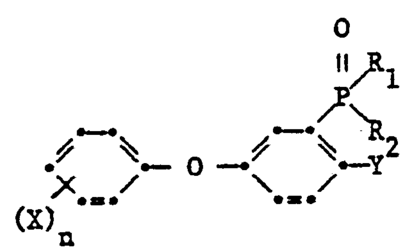

(I)

wherein each of $R_1$ and $R_2$ independently is hydroxyl, lower alkoxy, lower alkylthio, alkylamino, dialkylamino, chlorine, benzyloxy or benzylthio, X is halogen or a $-CF_3$, $-NO_2$, $-CN$, $-CONH_2$ or $-CSNH_2$ group, n is 0 to 3, and Y is halogen or one of the groups $NO_2$, $-OH$, $-CN$, $NH_2$, $-NH-CO-R$, $NH-COOR$ or $-NH-SO_2-R$, wherein R is an unsubstituted or halogenated lower alkyl radical, which process comprises reacting a 3,4-dinitrodiphenyl ether of the formula II

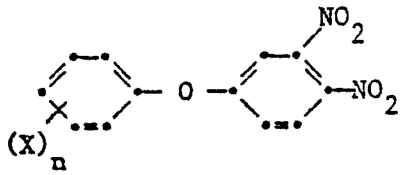

(II)

wherein X and n are as defined above, with a trialkylphosphite $P(OR')_3$, wherein R' is lower alkyl, in the temperature range from 50° to 150 °C, to give a dialkyl ester of a 2-nitro-5-phenoxyphenylphosphonic acid of the formula III

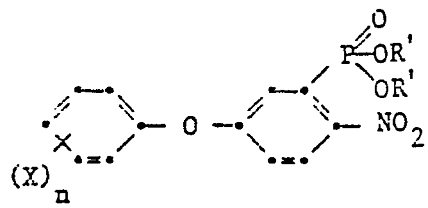

(III)

accompanied by the removal of one mole of a compound $R'-O-N=O$, and, if desired, converting said phosphonic acid dialkyl ester by subsequent operations, in a manner known per se, into the corresponding free phosphonic acid, or into another derivative thereof corresponding to the definitions of $R_1$ and $R_2$ in formula I, and/or, if desired, replacing the nitro group in the 2-position by another radical Y in accordance with the definition of formula I.

2. A process according to claim 1, wherein the product of the formula III obtained after the reaction with the trialkyl phosphite is catalytically hydrogenated in the presence of palladium on carbon in order to replace the nitro group in the 2-position by an amino group.

3. A process according to claim 1, wherein a substituted 3,4-dinitrodiphenyl ether of the formula

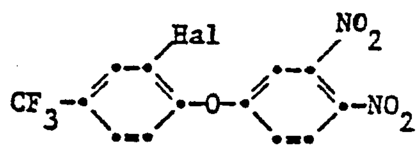

is used as starting material of the formula II in order to obtain a lower alkyl ester of a 2-nitro-5-(2'-halo-4'-trifluoromethylphenoxy)phenylphosphonic acid after reaction with a trialkyl phosphite $P(OR')_3$.

4. A herbicidal and plant growth-regulating composition, wherein the active component is a 2-substituted 5-phenoxyphenylphosphonic acid derivative of the formula I of claim 1.

5. A composition according to claim 4 which contains a compound of the formula I, wherein n is 2 and both radicals X are in the ortho- and para-position and each independently of the other is $-NO_2$, $-CN$, $-CF_3$ or halogen.

6. A composition according to claims 4 and 5 which contains a compound of the formula

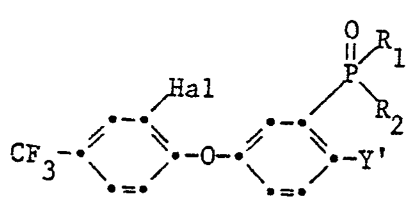

(IV)

wherein Hal is a halogen atom, especially chlorine, and Y' is halogen, the cyano or nitro group.

7. A composition according to claim 6 which contains a compound of the formula IV, wherein Hal is a chlorine atom, Y' is the nitro group and $R_1$ and $R_2$ are hydroxyl groups or lower $C_1$-$C_3$ alkoxy radicals.

8. A method of controlling weeds preemergence and post-emergence in crops of monocotyledonous and dicotyledonous cultivated plants and of inhibiting plant growth and desiccating parts of plants above

the soil postemergence, which method comprises the use of a composition as claimed in any one of claims 4 to 7.

9. A method of totally destroying existing plant growth postemergence in order to preparate a crop area for sowing new crops without prior ploughing, which method comprises the use of a composition as claimed in any one of claims 4 to 7.

10. A method according to claim 9 which comprises the use of a composition as claimed in either of claims 6 or 7.

**Revendications** (pour les Etats contractants : BE, CH, DE, FR, GB, IT, NL)

1. Nouveaux dérivés substitués en position 2 d'acides 5-phénoxy-phényl-phosphoniques de formule I

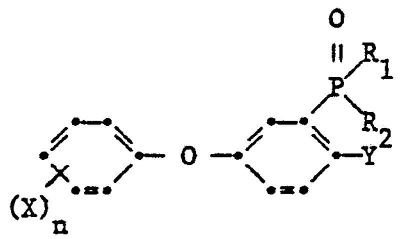

(I)

dans laquelle $R_1$ et $R_2$ représentent chacun, indépendamment l'un de l'autre, un groupe hydroxy, un groupe alcoxy inférieur, alkylthio inférieur, alkylamino inférieur ou dialkylamino inférieur ou encore le chlore, un groupe benzyloxy ou benzylthio, X représente un halogène ou un groupe $—CF_3$, $—NO_2$, —CN, $—CONH_2$ ou $—CSNH_2$, n est un nombre entier allant de 0 à 3 et Y représentant un halogène ou l'un des groupes $—NO_2$, —OH, —CN, $—NH_2$, —NH—CO—R, —NH—COOR ou $—NHSO_2—R$, R représentant un groupe alkyle inférieur éventuellement halogéné.

2. Dérivés d'acides phosphoniques selon la revendication 1 caractérisés en ce que, dans la formule I, n est égal à 2 et les deux substituants X sont en position ortho et para dans le radical phénoxy et consistent chacun, indépendamment l'un de l'autre, en un groupe $—NO_2$, —CN, $—CF_3$ ou un halogène.

3. Dérivés d'acides 5-(2'-halogéno-4'-trifluorométhyl-phénoxy)-phényl-phosphoniques selon la revendication 2, de formule

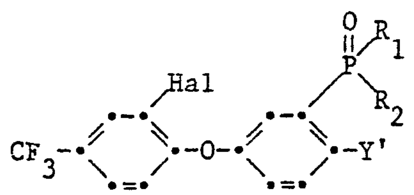

(IV)

dans laquelle Y' représente un halogène, le groupe nitro ou le groupe cyano et $R_1$ et $R_2$ ont les significations indiquées en référence à la formule I.

4. Dérivés d'acides phosphoniques selon la revendication 3, caractérisés en ce que Hal, dans la formule IV, représente un atome de chlore.

5. Dérivés d'acides phosphoniques selon la revendication 3, caractérisés en ce que Y' dans la formule IV, consiste en le groupe nitro.

6. Dérivés de l'acide 2-nitro-5-(2'-chloro-4'-trifluorométhyl-phénoxy)-phényl-phosphonique de formule

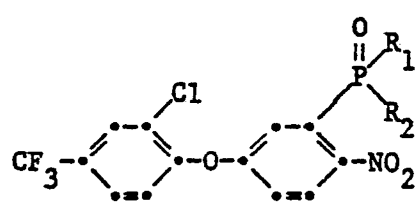

dans laquelle $R_1$ et $R_2$ représentent des groupes alcoxy en $C_1$-$C_3$.

7. Le composé 2-nitro-5(2'-chloro-4'-trifluorométhyl-phénoxy)-phényl-phosphonate de diméthyle.

8. Procédé de préparation des dérivés d'acides 5-phénoxy-phényl-phosphoniques substitués en position 2 de formule I de la revendication 1, caractérisé en ce que l'on fait réagir un éther 3,4-dinitro-diphénylique de formule II

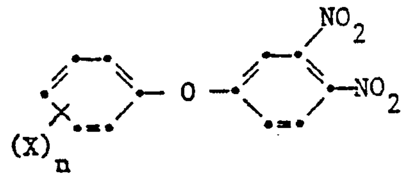

(II)

avec un phosphite de trialkyle $P(OR')_3$ dans lequel R' représente des groupes alkyles inférieurs, la réaction donnant, avec élimination d'une mole d'un composé R'—O—N=O, un ester dialkylique d'un acide 2-nitro-5-phénoxy-phénylphosphonique de formule III

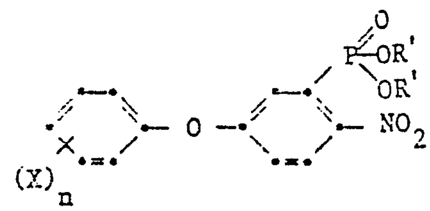

(III)

et en ce que, si on le désire, on convertit ce phosphonate de dialkyle, de manière connue en soi, en l'acide phosphonique libre correspondant ou un autre dérivé de cet acide conformément aux définitions de $R_1$ et $R_2$ de la formule I et/ou, si on le désire, on remplace le groupe nitro en position 2, de manière connue en soi, par un autre substituant Y conformément à la définition donnée en référence à la formule I.

9. Produit herbicide et régulateur de la croissance des végétaux, caractérisé en ce qu'il contient en tant que composant actif un dérivé d'acide 5-phénoxy-phényl-phosphonique substitué en position 2 de formule I selon la revendication 1.

10. Produit selon la revendication 9, caractérisé en ce qu'il contient en tant que composant actif l'acide 2-nitro-5-(2'-chloro-5'-trifluorométhyl-phénoxy)-phénylphosphonique ou un ester dialkylique inférieur de cet acide.

11. L'utilisation des nouveaux dérivés d'acides phosphoniques de formule I et de produits en contenant pour combattre les mauvaises herbes avant et après sortie de terre dans les cultures de végétaux dicotylédones et monocotylédones, ainsi que pour inhiber la croissance et dessécher les parties aériennes des végétaux.

12. L'utilisation des nouveaux dérivés d'acides phosphoniques de formule I et des produits en contenant pour la destruction totale après sortie de terre de végétaux existants en vue de préparer des surfaces de culture aux semailles de nouvelles cultures sans labourage préalable.

13. Utilisation selon la revendication 12 de produits contenant des substances actives selon la revendication 6.

**Revendications** (pour l'Etat contractant AT)

1. Procédé pour la préparation de nouveaux dérivés substitués en position 2 d'acides 5-phénoxy-phényl-phosphoniques de formule I

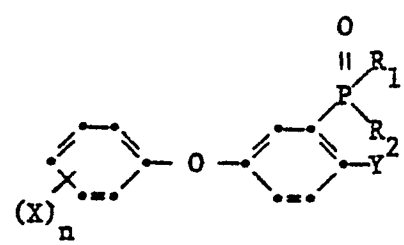

(I)

dans laquelle $R_1$ et $R_2$ représentent chacun, indépendamment l'un de l'autre, un groupe hydroxy, un groupe alcoxy inférieur, alkylthio inférieur, alkylamino inférieur ou dialkylamino inférieur ou encore le chlore, un groupe benzyloxy ou benzylthio, X représente un halogène ou un groupe $—CF_3$, $—NO_2$, —CN, $—CONH_2$ ou $—CSNH_2$, n est un nombre entier allant de 0 à 3 et Y représente un halogène ou l'un des groupes $—NO_2$, —OH, —CN, $—NH_2$, —NH—CO—R, —NH—COOR ou $—NHSO_2—R$, R représentant un groupe alkyle inférieur éventuellement halogéné, caractérisé en ce que l'on fait réagir un éther 3,4-dinitro-diphénylique de formule II

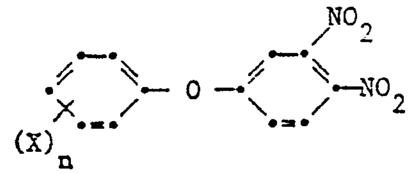

(II)

dans laquelle X et n ont la même définition que ci-dessus, avec un phosphite de trialkyle $P(OR')_3$ dans lequel R' représente des groupes alkyles inférieurs, à des températures comprises entre 50 et 150 °C, la réaction donnant, avec élimination d'une mole d'un composé R'—O—N=O, un ester dialkylique d'un acide 2-nitro-5-phénoxy-phényl-phosphonique de formule III

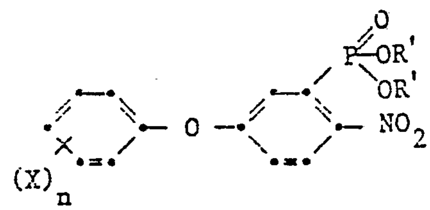

(III)

et en ce que, si on le désire, on convertit ce phosphonate de dialkyle, par des opérations ultérieures en soi connues, en l'acide phosphonique libre correspondant ou en un autre dérivé de cet acide conformément aux définitions de $R_1$ et $R_2$ de la formule I et/ou, si on le désire, on remplace le groupe nitro en position 2, par un autre substituant Y conformément à la définition donnée en référence à la formule I.

2. Procédé selon la revendication 1, caractérisé en ce que, après la réaction avec le phosphite de trialkyle, le produit obtenu de formule III est soumis à une hydrogénation catalytique en présence de charbon palladié, de manière à remplacer le groupe nitro en position 2 par un groupe amino.

3. Procédé selon la revendication 1, caractérisé en ce qu'on utilise en tant que produit de départ de formule II un éther 3,4-dinitro-diphénylique substitué de formule

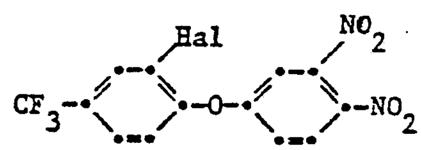

pour obtenir, après réaction avec un phosphite de trialkyle $P(OR')_3$, des esters de dialkyle inférieur d'un acide 2-nitro-5-(2'-halogéno-4'-trifluorométhyl-phénoxy)-phényle phosphonique.

4. Produit herbicide et régulateur de la croissance des végétaux, caractérisé en ce qu'il contient en tant que composant actif un dérivé d'acide 5-phénoxy-phényl-phosphonique substitué en position 2 de formule I selon la revendication 1.

5. Produit herbicide selon la revendication 4, caractérisé en ce qu'il contient un composant actif de formule I, dans laquelle n est égal à 2 et les deux substituants X sont en position ortho et para dans le radical phénoxy et consistent chacun, indépendamment l'un de l'autre, en un groupe $—NO_2$, —CN, $—CF_3$ ou un halogène.

6. Produit herbicide selon l'une des revendications 4 et 5, caractérisé en ce qu'il contient un composant actif de formule IV .

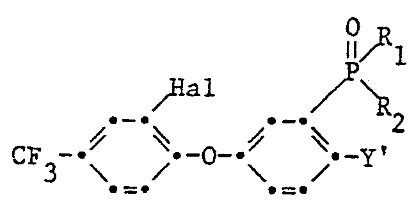

(IV)

dans laquelle Hal représente un atome d'halogène, en particulier le chlore et Y représente un atome d'halogène, le groupe cyano ou le groupe nitro.

7. Produit herbicide selon la revendication 6, caractérisé en ce qu'il contient un composant actif de formule IV, dans laquelle Hal représente un atome de chlore, Y' le groupe nitro et $R_1$ et $R_2$ représentent des groupes hydroxyle ou alcoxy inférieur en $C_1$ à $C_3$.

8. Utilisation du produit selon l'une des revendications 4 à 7, pour combattre les mauvaises herbes en pré-émergence et en post-émergence dans des cultures de végétaux dicotylédones et monocotylédones, ainsi qu'en post-émergence pour inhiber la croissance et dessécher les parties aériennes des végétaux.

9. Utilisation du produit selon l'une des revendications 4 à 7, pour la destruction totale après post-émergence des végétaux ou des restes de végétaux existants en vue de préparer des surfaces de culture aus semailles de nouvelles cultures sans labourage préalable.

10. Utilisation selon la revendication 9 d'un produit selon l'une des revendications 6 et 7.